Europäisches Patentamt

European Patent Office

Office européen des brevets

(11) Numéro de publication: **0 438 996 A2**

## (12) DEMANDE DE BREVET EUROPEEN

(21) Numéro de dépôt: 90870251.7

(22) Date de dépôt: 28.12.90

(51) Int. Cl.5: **B29C 47/60**

(30) Priorité: 26.01.90 BE 9000094

(43) Date de publication de la demande:
**31.07.91 Bulletin 91/31**

(84) Etats contractants désignés:
**BE CH DE FR GB IT LI NL**

(71) Demandeur: **EURO-STEL P.V.B.A.**
**Sint-Servaasstraat, 8**
**B-3770 Zichen-Zussen-Bolder(BE)**

(72) Inventeur: **Peters, Johannes**
**Bovenstraat 60**

**B-3770 Riemst(BE)**
Inventeur: **Jans, Maurice**
**Sint Servaasstraat 8**
**B-Riemst(BE)**
Inventeur: **Gianotti, Rafael**
**rue Adolphe Marquet 2**
**B-4680 Oupeye(BE)**

(74) Mandataire: **Dellicour, Paul**
**Office de Brevets E. Dellicour rue Fabry**
**18/012**
**B-4000 Liège(BE)**

(54) **Nouveau principe permettant une capacité de fusion plus élevée des extrudeuses et des machines de moulage sous pression.**

(57) La vis mise au point est constituée de différentes zones constituées d'une zone d'alimentation (L2) à simple ou double spire, diamètre de noyau (D3), zone de compression (L3), zone de dosage (L4), diamètre de noyau (D4), zone de décompression (L5), diamètre (D5), suivies par une section de cisaillement (L6) avec canaux d'entrée et d'évacuation, avec un flanc de débordement ou des flancs qui peuvent avoir différentes largeurs et diamètres en fonction des matériaux à mettre en oeuvre. La zone de cisaillement (L6) est suivie par une zone de mélange (L7) constituée de plusieurs anneaux avec des rainures appropriées. Le pas, S1, S2 et l'angle de pente α7 sont également déterminés par la matière première à mettre en oeuvre.

FIG.1

## NOUVEAU PRINCIPE PERMETTANT UNE CAPACITE DE FUSION PLUS ELEVEE DES EXTRUDEUSES ET DES MACHINES DE MOULAGE SOUS PRESSION.

La présente invention concerne un nouveau principe permettant une capacité de fusion plus élevée des extrudeuses et des machines de moulage sous pression, et cette invention a plusieurs objectifs.

Au fur et à mesure que des matières plastiques techniques de plus en plus nombreuses sont mises sur le marché, il y a de plus en plus de personnes surprises par l'usure trop rapide de la vis et du cylindre et par l'homogénéité insuffisante de la matière fondue et de la température de chaque particule fondue.

On a généralement tendance à combattre cet inconvénient en utilisant des couples d'entraînement plus puissants et des vis et cylindres plus longs, qu'il s'agisse des extrudeuses ou des machines de moulage sous pression.

Ceci entraîne toutefois des investissements plus élevés et une consommation d'énergie plus grande et le déplacement de certaines difficultés vers d'autres parties de la machine.

On améliore aussi régulièrement la vis et le cylindre par des méthodes métallurgiques, et ceci a donné lieu à la mise au point et à l'utilisation de cylindres bimétalliques constitués de différents alliages qui sont soit résistant à la corrosion, soit résistant à l'usure mécanique, soit encore qui possèdent les deux caractéristiques, ceci ayant permis un progrès remarquable.

Dans le domaine des vis, on a réalisé des recouvrements par soudure avec différents matériaux à base de cobalt, de nickel, de molybdène, etc. mais, en dépit de tous ces perfectionnements, on a dû constater qu'une solution métallurgique ne permettait pas de résoudre de manière définitive les difficultés résultant de l'usure trop rapide.

En effet, il convient de tenir compte de nombreux autres facteurs et la solution à mettre en oeuvre doit comporter une combinaison d'améliorations métallurgiques et de techniques de procédés.

Ceci signifie qu'il existe un très grand nombre de paramètres entre lesquels il faut rechercher un compromis afin d'obtenir un procédé de moulage sous pression ou un procédé d'extrusion optimale. L'un des nombreux paramètres, mais certes le plus important, est la géométrie de la vis.

Celle-ci doit être conçue de façon à ce que les pressions et des températures déterminées soient nécessaires pour obtenir une fusion optimale, pour assurer une pression constante, pour obtenir une matière fondue ayant une température parfaite ainsi qu'une parfaite dispersion des colorants et des matières de charge, des additifs, etc. aux endroits nécessaires et non aux endroits où il en résulterait toute une série d'inconvénients.

Des essais théoriques et pratiques ont permis de mettre au point le principe de la présente invention, afin de contribuer dans une large mesure :

- à limiter les longueurs de machines (en maintenant la vis et le cylindre les plus courts possible);
- à améliorer l'homogénéité de la pression et de la température;
- à diminuer l'usure par le fait que les pressions de poussée sont réduites dans les machines de moulage sous pression et que les rapports de compression sont plus faibles dans les extrudeuses;
- à obtenir une meilleure dispersion des colorants et additifs, etc.;
- a améliorer le mélange;
- à réduire la consommation d'énergie (dans certains cas, jusqu'à 25%);
- à obtenir des productions plus élevées;
- à réaliser des rendements spécifiques par tour et par heure (il en résulte moins d'usure vu qu'un nombre de tours élevé est un paramètre favorisant l'usure).

Un important avantage consiste également à pouvoir transformer les machines déjà existantes avec un cylindre et une vis trop courts en modifiant la géométrie de la vis de façon à ce que ces machines puissent devenir concurrentielles par rapport aux machines de plus grande longueur et, surtout, aux nouvelles machines.

Le principe de la présente invention consiste à optimaliser la géométrie de la vis des extrudeuses et des machines de moulage sous pression en réalisant les étapes suivantes :

- Dans les extrudeuses, la vis est à double pas dans la zone d'alimentation, la zone de compression et la zone de dosage, afin de résister aux forces excentriques et d'obtenir ainsi une symétrie des forces dans la zone de compression afin de créer une plus grande surface d'usure.
- Dans le cas des machines de moulage sous pression, la vis est généralement à un seul pas mais peut également être à double pas, ceci dépendant du matériau à mettre en oeuvre.
- La longueur de l'alimentation est grande, afin d'assurer un bon transport et d'éviter tout goulot d'étranglement dans la zone de compression, cette longueur variant entre 8 et 12 fois le diamètre de la vis.
- La longueur de compression est maintenue entre 2D et 8D, en fonction du matériau à mettre en oeuvre.

- La zone de dosage est maintenue courte mais la zone de dosage est suivie par une partie spécialement conçue qui remplace l'action de la zone de dosage.
- Le diamètre du noyau dans la zone d'alimentation est compris entre 0,1D et 0,5D, suivant qu'il s'agit d'une zone d'alimentation lisse ou rainurée.
- Le diamètre du noyau dans la zone de dosage est maintenu entre 0,5D et 0,3D, également en fonction du matériau à fondre
- Le pas est généralement maintenu entre 1D et 0,8D, avec 0,8D pour allonger artificiellement le temps de séjour.
- La largeur de pas des spirales est comprise entre 0,1D et 0,8D, suivant le MI du matériau.
- La zone de dosage est suivie par une zone de cisaillement qui est est spécialement réalisée en fonction du matériau à mettre en oeuvre; la section de cisaillement est maintenue entre 4 et 8D, suivant la longueur de vis disponible.
- Le diamètre du flanc de débordement est le même que celui du reste de la vis.
- Le diamètre du flanc de débordement est inférieur de 0,2 à 1,2 mm au diamètre extérieur de la vis car tout le matériau doit passer dans cet intervalle.
- Les canaux d'entrée et d'évacuation sont généralement maintenus symétriques et dépendent du matériau à mettre en oeuvre et du diamètre disponible; ils peuvent être à une, deux ou trois spires dans le cas des vis de grand diamètre.
- L'angle de pente varie entre 20 et 50° (suivant la matière première).
- Le diamètre d'entrée est inférieur au diamètre de dosage (décompression).
- La largeur de débordement est déterminée suivant la résistance de la matière première.
- Le diamètre d'entrée est plus faible que le diamètre de dosage (décompression).
- La largeur de débordement est déterminée suivant la résistance de la matière première.
- La zone de cisaillement est suivie par une zone de mélange constituée de 2 ou 6 anneaux séparés par des rainures, avec une angle de pente de 45° : le nombre de rainures dépend du diamètre disponible.
- Dans le cas d'une extrudeuse, la zone de mélange est suivie par une tête et, dans le cas d'une machine de moulage sous pression, par un système à soupape.

D'autres détails sont décrits ci-après, uniquement à titre d'exemple et en se basant sur les figures en annexe, qui représentent respectivement :

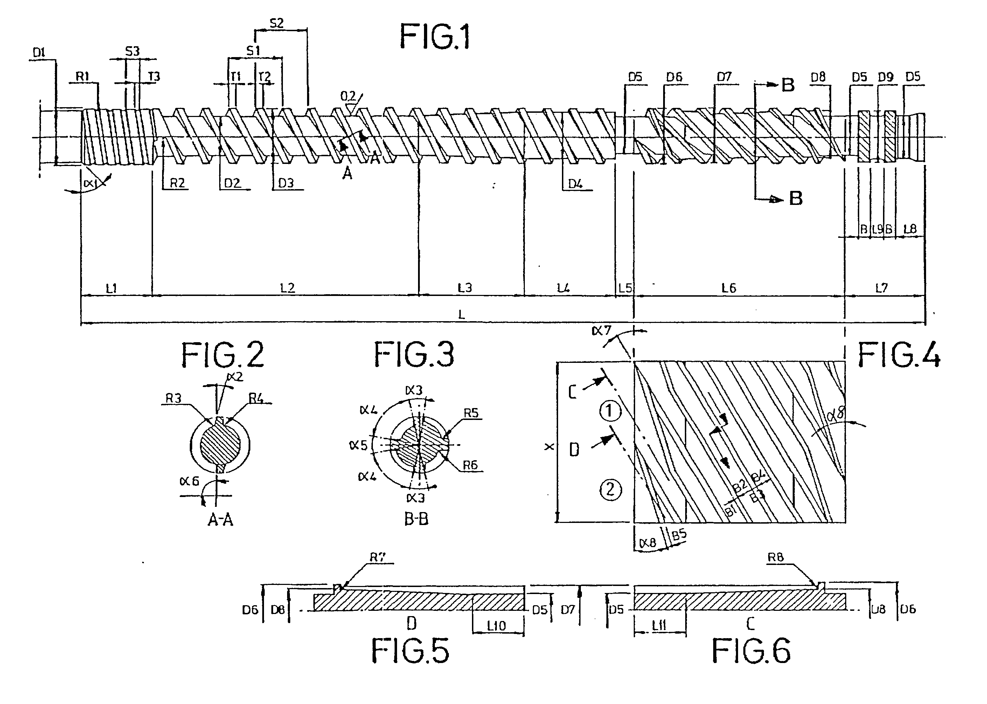

La figure 1, une vue de la vis d'extrusion ou d'injection suivant la présente invention;

La figure 2, une coupe suivant AA de la figure 1, à double spire, avec indication de l'angle;

La figure 3, une coupe suivant BB de la figure 1, section de cisaillement, avec répartition des angles.

La figure 4, une section de cisaillement développée avec angle de pente, angle d'entrée et d'évacuation, alimentation, largeur de débordement, canal de largeur d'évacuation, flanc de retenue;

La figure 5, une coupe droite de la section de cisaillement, avec diamètre extérieur, profondeur d'entrée, profondeur d'évacuation, longueur constante;

La figure 6, une coupe gauche de la section de cisaillement avec diamètre extérieur, profondeur d'entrée, profondeur d'évacuation, longueur constante.

Une vis d'extrusion ou d'injection suivant la présente invention est constituée d'un labyrinthe L1 pour empêcher les retours de matière , suivi par une zone d'alimentation L2 avec un diamètre de noyau D2 à double spire avec pas SI et S2 et largeur de spirale T1 et T2, suivie par une zone de compression L3, diamètre de noyau croissant continuellement de D2 à D2, suivie par une zone de transport de dosage de longueur L4 et de diamètre de noyau D4, suivie par la zone de décompression L5 avec un diamètre de noyau D5, suivie par une section de cisaillement L6 (voir figure 4), suivie par une zone de mélange L7 constituée de deux anneaux de mélange avec un diamètre D9 et un diamètre de noyau D5.

FONCTIONNEMENT DE LA VIS SUIVANT L'INVENTION :

Comme l'introduction de la matière première (pouvant avoir toutes sortes de formes, poudres, granulés, produits de recyclage, paillettes, morceaux, etc.) s'effectue par l'orifice d'alimentation approprié et un cylindre approprié (éventuellement rainures ou analogues), le matériau arrive dans la vis de la zone d'alimentation et la matière première est entraînée vers l'avant par une bonne action de transport dans la longue zone d'alimentation; ceci s'effectue d'une manière efficace, sans former de goulot d'étranglement ou provoquer la fusion trop rapide de la matière première.

Le matériau commence déjà à fondre lentement, le matériau arrive dans la zone de compression où une compaction et une fusion supplémentaire sont provoquées, une zone de dosage plus profonde que dans les autres vis existantes entraîne simultanément plus de matière vers l'avant et provoque, par suite des flancs plus élevés, un meilleur effet de transport; cet effet de transport est encore amélioré par les doubles spires car il y a ici deux flancs qui poussent la matière plastique.

Dans la zone L5, on obtient du matériau qui est déjà plastique pour la plus grande partie mais où il existe encore des particules non fondues. Pour fondre davantage ces parties, nous utilisons une pièce de cisaillement spéciale qui est conçue de façon à ce que la matière soit fondue davantage tout en étant simultanément encore transportée et en ne provoquant pratiquement aucune perte de pression, ceci étant très important parce que les premières zones de la vis doivent produire moins de pression pour surmonter la résistance.

Le matériau non homogène est amené par la zone de dosage dans les canaux d'entrée de la partie de cisaillement, qui est réalisée de façon à former un compromis avec les canaux d'évacuation.

Le matériau déjà fondu est plus liquide et a une plus faible viscosité si bien qu'il s'écoule au début par-dessus le flanc de débordement à travers un intervalle étroit dans le canal d'évacuation et subit, par suite du glissement le long de la paroi chaude du cylindre, un supplément de chaleur qui assure une fusion optimale. Le reste du matériau non fondu est poussé vers l'avant dans la partie de cisaillement. Comme le diamètre de noyau de la partie de cisaillement a une forme conique, le produit est comprimé, fond davantage et s'écoule complètement.

A la fin, on obtient un matériau complètement fondu qui est évacué et est encore mélangé en supplément par les anneaux de mélange pour obtenir un ensemble homogène qui, dans le cas d'une extrudeuse, est alors poussé dans le moule et, dans le cas d'une machine de moulage sous pression, est amené par un système de soupape dans la partie antérieure du cylindre pour être ensuite injecté dans la matrice.

LISTE DES NUMEROS DE REFERENCE.

| | |
|---|---|
| L1 : | labyrinthe |
| L2 : | zone d'alimentation |
| D2 : | diamètre de noyau de zone d'alimentation |
| D3 : | diamètre extérieur de vis |
| S1, S2 : | pas |
| T1, T2 : | largeur de spirale |
| L3 : | zone de compression |
| L4 : | zone de dosage |
| L5 : | zone de décompression |
| D5 : | diamètre zone de décompression |
| D6 : | diamètre flanc de débordement |
| D7 : | diamètre extérieur |
| L6 : | section de cisaillement |
| D5 : | diamètre section de mélange |

| | |
|---|---|
| B : | largeur anneau de mélange |
| D9 : | diamètre extérieur anneau de mélange |
| B4 : | canal d'entrée |
| B2 : | canal d'évacuation |
| B3 : | largeur flanc de débordement |
| B1 : | largeur flanc de retenue |
| X7 : | angle de pente partie de cisaillement |
| L10, L11 : | longueur à profondeur constante de partie de cisaillement |
| X3 : | répartition de la partie de cisaillement |

**Revendications**

1. Nouveau principe à capacité de fusion plus élevée pour extrudeuse et machine de moulage sous pression, caractérisé par :

   - Dans les extrudeuses, la vis est à double pas dans la zone d'alimentation, la zone de compression et la zone de dosage, afin de résister aux forces excentriques et d'obtenir ainsi une symétrie des forces dans la zone de compression afin de créer une plus grande surface d'usure.

   - Dans le cas des machines de moulage sous pression, la vis est généralement à un seul pas mais peut également être à double pas, ceci dépendant du matériau à mettre en oeuvre.

   - La longueur de l'alimentation (L2) est grande, afin d'assurer un bon transport et d'éviter tout goulot d'étranglement dans la zone de compression, cette longueur variant entre 8 et 12 fois le diamètre de la vis.

   - La longueur de compression (L3) est maintenue entre 2D et 8D, en fonction du matériau à mettre en oeuvre.

   - La zone de dosage (L4) est maintenue courte mais la zone de dosage est suivie par une partie spécialement conçue qui remplace l'action de la zone de dosage.

   - Le diamètre du noyau (D2) dans la zone d'alimentation est compris entre 0,1D et 0,5D, suivant qu'il s'agit d'une zone d'alimentation lisse ou rainurée.

   - Le diamètre du noyau (D4) dans la zone de dosage est maintenu entre 0,5D et 0,3D, également en fonction du matériau à fondre

   - Le pas est généralement maintenu entre 1D et 0,8D, pour allonger artificiellement le temps de séjour.

   - La largeur de pas des spirales est comprise entre 0,1D et 0,8D, suivant le MI du matériau.

- La zone de dosage (L4) est suivie par une zone de cisaillement (L6) qui est spécialement réalisée en fonction du matériau à mettre en oeuvre; la section de cisaillement (L6) est maintenue entre 4 et 8D, suivant la longueur de vis disponible.
- Le diamètre du flanc de débordement (D6) est le même que celui du reste de la vis.
- Le diamètre du flanc de débordement (D5) est inférieur de 0,2 à 1,2 mm au diamètre extérieur de la vis car tout le matériau doit passer dans cet intervalle.
- Les canaux d'entrée et d'évacuation sont généralement maintenus symétriques et dépendent du matériau à mettre en oeuvre et du diamètre disponible; ils peuvent être à une, deux ou trois spires dans le cas des vis de grand diamètre.
- L'angle de pente varie entre 20 et 50° (suivant la matière première).
- Le diamètre d'entrée (D5) est inférieur au diamètre de dosage (décompression).
- La largeur de débordement (B3) est déterminée suivant la résistance de la matière première.
- La zone de cisaillement est suivie par une zone de mélange constituée de 2 ou 6 anneaux séparés par des rainures, avec un angle de pente de 45° : le nombre de rainures dépend du diamètre disponible.
- Dans le cas d'une extrudeuse, la zone de mélange est suivie par une tête et, dans le cas d'une machine de moulage sous pression, par un système à soupape.

FIG.1

FIG.2

FIG.3

FIG.4

A-A

B-B

FIG.5

FIG.6

EP 0 438 996 A2